# EUROPÄISCHE PATENTSCHRIFT

(11) **EP 0 501 145 B1**
(45) Veröffentlichungstag und Bekanntmachung des Hinweises auf die Patenterteilung: **14.08.1996**
(21) Anmeldenummer: 92101219.1
(22) Anmeldetag: 25.01.1992
(51) Int. Cl.: F16K 41/10, F16K 51/02

(54) **Leckagefreie Durchführung**
Leakproof feedthrough
Traversée de paroi étanche

(30) Priorität: 26.02.1991 DE 4105944
(43) Veröffentlichungstag der Anmeldung: 02.09.1992
(73) Patentinhaber: ZEO-TECH Zeolith Technologie GmbH, D-85716 Unterschleissheim (DE)
(72) Erfinder: Engelhardt, Reiner, W-8000 München 45 (DE)

(56) Entgegenhaltungen:
- WO-A-91/16563
- DE-A- 2 708 742
- GB-A- 907 876

## Beschreibung

Die Erfindung betrifft eine leckagefreie Durchführung an Armaturen, insbesondere an vakuumdichten Ventilen aus einem flexiblen Faltenbalg, einem beweglichen Dichtelement und einem feststehenden Dichtsitz mit den Merkmalen des Oberbegriffs des Anspruchs 1.

Aus den Schriften DE-A-2 708 742 bzw. GB-A-907876 sind leckagefreie Ventile und Drehdurchführungen dieser Art bekannt. Derartige Ventile bestehen bespielsweise aus einem beweglichen Metallbalg, welcher durch Schraub- oder Kippvorrichtungen in seiner axialen Richtung so gestreckt oder gedehnt wird, daß sich ein bewegliches Dichtelement von einem feststehenden Dichtsitz abhebt oder auf diesen aufgepreßt wird. Ventile nach diesem Prinzip sind außer in der Vakuumtechnik auch bei Armaturen im Überdruckbereich üblich.

Nachteilig bei diesen Armaturen ist ein relativ hoher Fertigungsaufwand und der damit verbundene, verglichen mit nicht vakuumdichten Armaturen, hohe Preis. Ein weiterer Nachteil besteht darin, daß die durch die Ventile strömenden Medien innerhalb des Ventilkörpers stark umgelenkt werden müssen. Dadurch entstehen Turbulenzen, die den Strömungswiderstand weiter erhöhen.

Weiterhin sind vakuumdichte Durchführungen bekannt, welche eine angulare Bewegung des Faltenbalges ausnutzen. Derartige Vorrichtungen bedingen einen noch höheren Fertigungsaufwand, da die angulare Bewegung über mindestens eine Drehachse gestützt werden muß.

Aufgabe der vorliegenden Erfindung ist eine leckagefreie Durchführung durch einen Armaturenkörper, welche das Öffnen und Schließen bzw. Geschlossenhalten und Offenhalten und insbesondere auch die Einstellung von Zwischenpositionen einer strömungsbeaufschlagten Leitung gewährleistet.

Gelöst wird diese Aufgabe bei einer leckagefreien Durchführung der oben genannten Art durch die kennzeichnenden Merkmale des Anspruchs 1.

Bei geeigneter Wahl des Balgmaterials, insbesondere dessen Federrate des Verhältnisses von Balgdurchmesser zu Balglänge im Bereich von 0,5 bis 2 kann ein sicheres Öffnen und Schließen eines Ventils erreicht werden.

Durch die erfindungsgemäße Vorrichtung ist es auch möglich, ohne weitere Stütz- oder Umlenkvorrichtungen eine Längen- bzw. Winkeländerung in beliebiger Ebene durchzuführen. In der Regel wird die angulare Balgbewegung in einer Ebene erfolgen. Besonders vorteilhaft ist es aber, wenn das bewegliche Balgende aus der Normalebene ausgelenkt wird, um beispielsweise eine Arretierung in einer beliebigen Position zu ermöglichen.

Durch geeignete Wahl der Balgfederrate kann auch die Rückstellkraft bzw. Zugkraft in weiten Bereichen frei gewählt werden.

Die Fertigung der erfindungsgemäßen Durchführung beinhaltet lediglich zwei Löt- bzw. Schweißvorgänge. Zum einen ist das eine Ende des Balges auf den Armaturenkörper leckagedicht aufzubringen, zum anderen wird das freie Balgende, beispielsweise mit einer Platte verbödet, welche einen Übertragungsstift vorzugsweise in axialer Balgrichtung enthält.

Prinzipiell läßt sich das freie Balgende sowohl im Innenbereich als auch im Außenbereich des Armaturenkörpers anordnen. Bei einer Anordnung außerhalb des Armaturenkörpers, beispielsweise eines geraden Rohrstückes, wird die Rohrströmung nicht oder nur unwesentlich durch die Übertragungsmittel beeinträchtigt.

Besonders vorteilhaft eignet sich die leckagefreie Durchführung in Unterdrucksystemen, insbesondere in Sorptionssystemen, bei welchen kalter bzw. überhitzter Wasserdampf abgesperrt werden soll. Bei diesen Anwendungen werden hohe Strömungsquerschnitte mit möglichst geringem Strömungswiderstand benötigt. Da es sich hierbei oft um hermetisch geschlossene Apparaturen handelt, ist eine hohe Leckagesicherheit gewünscht. Die Übertragungsmittel können auch über eine relativ lange Wegdistanz das Dichtelement sicher betätigen. Dadurch ist es möglich, die temperaturempfindliche Dichtung in temperaturgeschützte Anlagenbereiche einzubauen, während der Balg und die Betätigungselemente in leichter zugänglichen, aber heißen Bereichen liegen.

Durch eine Ergänzung dem Prinzip nach bekannter Arretierungsvorrichtungen läßt sich die Position der Übertragungsmittel in jeder beliebigen Lage fixieren. Besonders einfach und vorteilhaft ist es hierzu die Federwirkung des Balges zu nutzen. So läßt sich beispielsweise die Federwirkung des Balges in mehr oder weniger axialer Richtung nutzen, um Arretierungsmittel in bestimmten Positionen zu fixieren. In diesem Fall wird also der Balg nicht nur angular ausgelenkt, sondern auch mehr oder weniger axial gedehnt bzw. gestreckt.

Die Übertragungsmittel lassen sich kostengünstig beispielsweise aus Drahtstücken formen. Sofern der Draht aus federndem Material aufgebaut ist, kann ein damit geschlossenes Ventil auch zugleich als Rückschlagsventil arbeiten. Besonders in Sorptionsapparaten, welche nach dem Grundprinzip der Ad und Desorptionsreaktion arbeiten, ist die erfindungsgemäße leckagefreie Durchführung besonders geeignet, da in diesen Fällen eine Arbeitsmittelströmung in einer Strömungsrichtung vollkommen absperrbar sein muß, in entgegengesetzter Richtung jedoch auch bei geschlossenem Ventil aus Sicherheitsgründen ein Öffnen bei Gegendruck möglich sein muß. In diesem Fall läßt sich also ein Ventil konstruieren, das in einer Strömungsrichtung absolut dicht schließt, während es auch im geschlossenen Zustand in der Gegenrichtung quasi als federbelastetes Rückschlagsventil wirkt.

Metallbälge sind beispielsweise aus dem Taschenbuch Nr. 441 der Fa. Witzenmann GmbH, Pforzheim, bekannt. Demnach gibt es eine Vielzahl von Anwendungsgebieten, Werkstoffkriterien, Elastizitätseigenschaften und Lastspielkombinationen. Besonders bewährt haben sich Bälge aus Edelstahl, Messing und Bronze. Aber auch Kunststoff- oder Gummibälge sind für Einsatzbereiche außerhalb der Hochvakuumtechnik vorteilhaft einzusetzen.

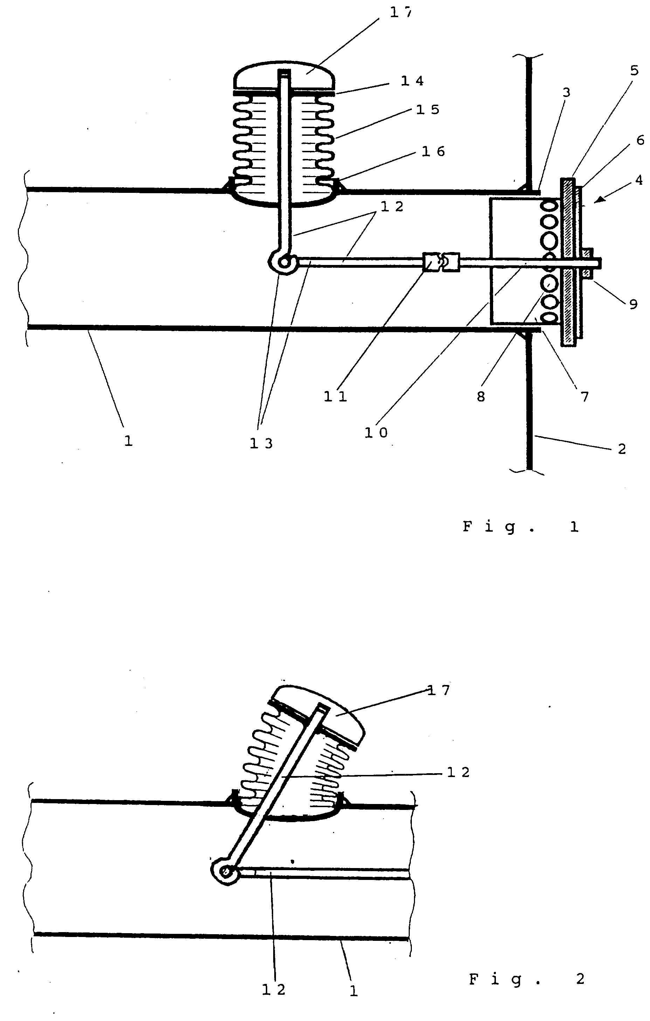

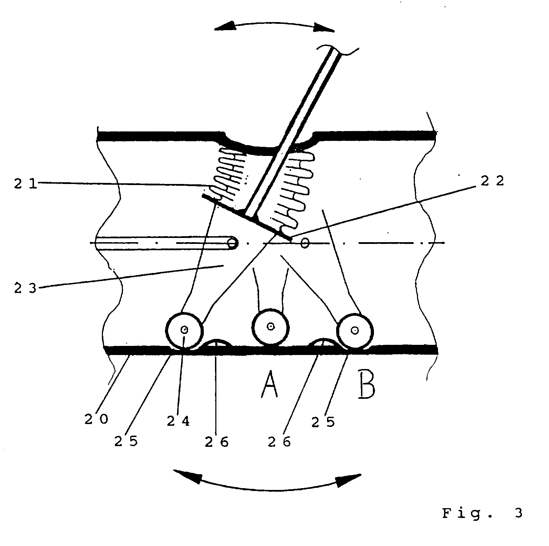

In der Zeichnung ist in Fig. 3 eine Ausführungsform der Erfindung dargestellt. Die in den Fig.1 und 2 dargestellte Ausführungsform ist nicht von den Patentansprüchen umfaßt; sie dient lediglich zur Erläuterung der eingentlichen Erfindung. Es zeigen:
Fig. 1 eine leckagefreie Durchführung in geschnittener Darstellung für einen Ventilkörper,
Fig. 2 die Durchführung nach Fig. 1 im ausgelenkten Zustand und
Fig. 3 eine leckagefreie Durchführung mit Arretierungsmitteln.

Fig. 1 zeigt einen Armaturenkörper 1 in Rohrform, welcher in ein Seitenteil 2 eines Behälters eingelötet ist. Das rechte Ende des Armaturenkörpers 1 ist als Dichtsitz 3 ausgearbeitet. Innerhalb dieses Dichtsitzes ist ein bewegliches Dichtelement 4 geführt. Dieses besteht aus einer Dichtung 5, einer Druckplatte 6 und einem Führungszylinder 7. Dieser ist im Strömungsbereich mit Bohrungen 8 versehen. Im geöffneten Zustand strömt durch diese Bohrungen 8 ein Medium aus dem Behälter in den Armaturenkörper 1. Führungszylinder 7, Dichtung 5 und Druckplatte 6 sind mittels einer Mutter 9 und einem Gewindestift 10 verschraubt. Über eine Kardan-Verbindung 11 ist der Gewindestift 10 mit einem Übertragungsmittel 12 flexibel verbunden. Die Übertragungsmittel 12 bestehen aus Drahtstücken, welche über Ösen 13 in Verbindung stehen. Das eine Ende des Übertragungsmittels 12 ist mit einer Verschlußplatte 14 kraftschlüssig und vakuumdicht verbunden. Die Verschlußplatte 14 selbst ist mit dem beweglichen Ende des Balges 15 verlötet. Das zweite Ende des Balges 15 ist mit dem Armaturenkörper 1 unter Verwendung eines Lötstützringes 16 verlötet. Auf der balgabgewandten Seite der Verschlußplatte 14 ist ein Betätigungsknauf 17 aufgesteckt. Zum Betätigen der leckagefreien Durchführung wird der Betätigungsknauf 17 manuell in angularer Balgrichtung betätigt.

In Fig. 2 ist die Vorrichtung gemäß Fig. 1 in geänderter Position dargestellt. Durch die Auslenkung des Betätigungsknaufes 17 nach rechts wird auf die Übertragungsmittel 12 entsprechend den Balgeigenschaften eine Linksbewegung innerhalb des Armaturenkörpers 1 hervorgerufen. Diese Auslenkung wird auf das in der Fig. 1 dargestellte Dichtelement 4 übertragen. Dadurch wird die Dichtung 5 auf den Dichtsitz 4 gepreßt. Das dargestellte Ventil ist in dieser Stellung geschlossen. Zum Öffnen muß der Betätigungsknauf 17 nach links in die Nullstellung gemäß Fig. 1 geschoben werden. Eine Betätigung des Betätigungsknaufs 17 über diese Nullstellung hinaus würde zu einer weiteren Öffnung des Dichtelementes 4 führen.

Fig. 3 zeigt eine Ausgestaltung des Erfindungsgedankens. In ein, ebenfalls im Schnitt dargestelltes zylindrisches Rohr 20 ist senkrecht zur Rohrachse ein Balg 21 eingelötet. Das bewegliche Ende des Balges 21 ragt in dieser Ausführungsform in den Innenraum des Rohres 20. Eine Verschlußplatte 22 schließt das bewegliche Schlauchende ab und überträgt die angulare Drehbewegung an ein Arretierblech 23, welches über Rollen 24 auf der Rohrinnenseite anliegt. Bei angularen Kippbewegungen des Balges läuft diese Rolle 24 entlangt der Rohrinnenseite nach links. In der Fig. 3 sind zwei weitere Stellungen A und B dieser Rollen angedeutet. Die Rohrinnenseite ist mit Vertiefungen 25 oder Noppen 26 versehen. Die Rollen 24 werden durch die Federkraft des Balges in die Vertiefungen 25 eingedrückt und dadurch fixiert. Das Anheben der Rollen 24 beim Überrollen der Noppen 26 erfolgt durch ein Stauchen des Balges in mehr oder minder axialer Richtung.

## Patentansprüche

1. Leckagefreie Durchführung durch einem Armaturenkörper (1) insbesondere bei Vakuumventilen mit einem flexiblen Balg (15), der mit seinem einen Ende leckagefrei mit dem Armaturenkörper (1) verbunden und mit seinem anderen Ende in bezug auf seine Körperachse eine angulare Kippbewegung ausführt und das so bewegliche Ende leckagedicht verschlossen ist und in seinem äußeren Bereich Mittel aufweist, die es erlauben, den Balg mechanisch auszulenken und die äußere mechanische Auslenkung in den Armaturen-Innenraum übertragen,
dadurch gekennzeichnet,
daß das bewegliche Balgende in den Innenraum des Armaturenkörpers ragt und Arretierungsmittel (23, 24) aufweist, die eine Fixierung der Kippdurchführung in bestimmter Position erlauben.

2. Leckagefreie Durchführung nach Anspruch 1,
dadurch gekennzeichnet,
daß die Arretierungsmittel (23, 24) die Federwirkung des Balges in axialer Richtung bei Druck oder Zug nutzen.

3. Leckagefreie Durchführung nach einem der vorangehenden Ansprüche,
dadurch gekennzeichnet,
daß das am Armaturenkörper (1) angebrachte Balgende mit dem Armaturenkörper (1) verschweißt oder verlötet ist.

4. Leckagefreie Durchführung nach einem der vorangehenden Ansprüche,
dadurch gekennzeichnet,
daß die Übertragungsmittel (12) flexibel ausgeführt sind.

5. Leckagefreie Durchführung nach einem der vorangehenden Ansprüche,
dadurch gekennzeichnet,
daß die Durchführung in Sorptionsapparaten Verwendung findet.

6. Leckagefreie Durchführung nach einem der vorangehenden Ansprüche,
dadurch gekennzeichnet,
daß die Arretierungsmittel eine Auslenkung des Balges (15) aus der Normalebene zur Arretierung in beliebiger Position nutzen.

## Claims

1. Leak-free feed-through through a valve body (1), in particular for vacuum valves, with a flexible bellows (15) which is connected by one of its ends leak-free with the valve body (1) and at its other end executes an angular tilting movement in relation to the axis of its body and the mobile end has a leak-proof seal and in its outer area exhibits means which allow it to deflect the bellows mechanically and transmit the outer mechanical deflection into the interior of the valve, characterised in that the mobile end of the bellows extends into the interior of the valve body and exhibits locking means (23, 24) which allow fixture of the tilting feed-through in a specific position.

2. Leak-free feed-through according to claim 1, characterised in that the locking means (23, 24) utilise the spring action of the bellows in the axial direction when under compression or tension.

3. Leak-free feed-through according to one of the preceding claims, characterised in that the end of the bellows attached to the valve body (1) is welded or soldered with the valve body (1).

4. Leak-free feed-through according to one of the preceding claims, characterised in that the transmitting means (12) are flexible.

5. Leak-free feed-through according to one of the preceding claims, characterised in that the feed-through is used in sorption apparatus.

6. Leak-free feed-through according to one of the preceding claims, characterised in that the locking means utilise a deflection of the bellows (15) out of the normal plane for locking in any position.

## Revendications

1. Traversée sans fuite dans un corps (1) de robinet, notamment dans des vannes à vide, comportant un soufflet (15) souple, qui est relié sans fuite par une de ses extrémités au corps (1) d'armature et qui effectue, par son autre extrémité, un mouvement de basculement angulaire par rapport à l'axe de son corps, la partie pouvant se mouvoir de cette manière étant fermée de manière étanche aux fuites et comportant, dans sa zone extérieure, des moyens qui permettent de dévier mécaniquement le soufflet et qui transmettent la déviation mécanique extérieure à la chambre intérieure du robinet,
caractérisée en ce que
l'extrémité mobile du soufflet est saillante dans la chambre intérieure du corps de robinet et comporte des moyens (23, 24) d'arrêt, qui permettent d'immobiliser la traversée basculante dans une position déterminée.

2. Traversée sans fuite suivant la revendication 1,
caractérisée en ce que
les moyens (23,24) d'arrêt utilisent l'effet ressort du soufflet dans une direction axiale en cas de pression ou de traction.

3. Traversée sans fuite suivant l'une des revendications précédentes,
caractérisée en ce que
l'extrémité du soufflet mise en place sur le corps (1) de robinet est brasée ou soudée au corps (1) du robinet.

4. Traversée sans fuite suivant l'une des revendications précédentes,
caractérisée en ce que
les moyens (12) de transmission sont souples.

5. Traversée sans fuite suivant l'une des revendications précédentes,
caractérisée en ce que
la traversée est utilisée dans des appareils de sorption.

6. Traversée sans fuite suivant l'une des revendications précédentes,
caractérisée en ce que
les moyens d'arrêt utilisent une déviation du soufflet (15) à partir du plan normal pour l'arrêt dans une position quelconque.
